**Europäisches Patentamt**

(19) **European Patent Office**

**Office européen des brevets**

(11) Veröffentlichungsnummer: **0 111 914**

**A2**

(12) # EUROPÄISCHE PATENTANMELDUNG

(21) Anmeldenummer: **83112710.5**

(22) Anmeldetag: **16.12.83**

(51) Int. Cl.³: **G 01 S 13/54**

(30) Priorität: **21.12.82 DE 3247244**

(43) Veröffentlichungstag der Anmeldung:
**27.06.84 Patentblatt 84/26**

(84) Benannte Vertragsstaaten:
**AT BE CH DE FR GB IT LI NL SE**

(71) Anmelder: **SIEMENS AKTIENGESELLSCHAFT**
**Berlin und München Wittelsbacherplatz 2**
**D-8000 München 2(DE)**

(72) Erfinder: **Weis, Klaus, Dipl.-Ing.**
**Wallbergweg 2**
**D-8031 Gilching(DE)**

(72) Erfinder: **Peters, Rainer, Dipl.-Ing.**
**Goerdelerstrasse 12**
**D-8025 Unterhaching(DE)**

(54) **Puls-Doppler-Radargerät.**

(57) Um in Puls-Doppler-Radargeräten mit veränderbarer Pulsfolgefrequenz Festzeichenechos aus Überreichweiten unterdrücken zu können, sind Mittel vorgesehen, die eine Synchronisierung des Antennendrehwinkels des Radargerätes und des Pulsfolgefrequenzwechsels des Radarsenders (Stagger-Periode) herbeiführen, so daß Überreichweitenechos aufeinander folgender Antennenumdrehungen demselben Entfernungs- und Azimutinkrement zugeordnet sind und durch Festzeichenfilter unterdrückt werden können.

FIG 1

EP 0 111 914 A2

SIEMENS AKTIENGESELLSCHAFT
Berlin und München

Unser Zeichen
VPA

**82 P 2 0 8 9** E

## Puls-Doppler-Radargerät

Die Erfindung bezieht sich auf ein Puls-Doppler-Radargerät mit veränderbarer Pulsfolgefrequenz (Staggerung) und mit einer Einrichtung zur Festzeichenunterdrückung (MTI).

Bei Radargeräten mit Festzeichenunterdrückung (MTI) mit großer Reichweite und/oder hoher Sendefrequenz treten bei Entfernungseindeutigkeit und einer konstanten Pulsfolgefrequenz im interessierenden Geschwindigkeitsbereich mehrere Blindgeschwindigkeitsstellen auf. Es ist bekannt, diese unerwünschten Blindgeschwindigkeitsstellen durch Wechsel der Pulsfolgefrequenz (Staggerung) zu eliminieren. Ein Nachteil dieser Methode besteht darin, daß sich das Frequenzspektrum von Festzielechos aus Überreichweiten in den Bereich der bewegten Ziele aus eindeutigen Entfernungen verschiebt und im MTI-Filter nicht unterdrückt werden kann.

Aufgrund des Wechsels der Pulsfolgefrequenz (Staggerung) fallen die Echos der einzelnen Hits von Zielen oder von Störern, die diese Echosignale vortäuschen, aus Überreichweiten in verschiedene Entfernungstore. Sie stellen somit im jeweiligen Entfernungstor Einzelimpulse dar; die Hits können nicht aufintegriert werden. Die Wahrscheinlichkeit ihrer Entdeckung vermindert sich bei überlagertem Rauschen wunschgemäß erheblich.

Erstreckt sich jedoch ein ausgedehntes Clutter-Gebiet

Ha 1 Mai / 18.12.82

über Entfernungen, die für das Radargerät mehrere Überreichweiten gleichzeitig darstellen, so wächst die
Wahrscheinlichkeit, daß mehrere Zielechos aus mehreren
Überreichweiten sich in demselben Entfernungstor innerhalb der Nachintegrationszeit häufen, erheblich. In
diesem Fall führen Festzeichenechos, die aus Überreichweiten stammen, zu einer Fehlanzeige.

Da infolge der Staggerung die Festzeichenechos nach
jeder Antennenumdrehung (scan to scan) in anderen Entfernungstore erscheinen können, sind Schaltungen zur
Unterdrückung von Festzeichen, die die Meßergebnisse
über eine oder mehrere Antennenumdrehungen speichern
und für die Korrektur weiterer Messungen auswerten,
wirkungslos.

Der Erfindung liegt die Aufgabe zugrunde, für ein Puls-
Doppler-Radargerät der eingangs genannten Art Mittel
anzugeben, die es ermöglichen, Anzeigen von Festzeichenechos aus Überreichweiten zu unterdrücken. Gemäß der
Erfindung wird diese Aufgabe dadurch gelöst, daß der
Antennendrehwinkel des Radargerätes und die Periode des
Pulsfolgefrequenzwechsels (Stagger-Periode) synchronisiert sind, derart, daß die Echos von gleichen Festzeichen aus Überreichweiten von Antennenumdrehung zu Antennenumdrehung demselben Entfernungs- und Azimutinkrement zugeordnet sind.

Infolge der Synchronisierung erhalten Clutter-Echos aus
Überreichweiten dasselbe stationäre Verhalten, wie
Clutter-Echos aus der eindeutigen Reichweite und können
gemäß einer Ausgestaltung der Erfindung mit Clutter-
oder Restclutter-Karten wirkungsvoll unterdrückt
werden.

0111914

Sind am Pulsfolgefrequenzwechsel innerhalb einer Stagger-Periode mehr als zwei unterschiedliche Pulswiederholzeiten (PRT) beteiligt, dann werden diese Zeiten und ihre Reihenfolge durch einen Stagger-Algorithmus festgelegt. Um sicherzustellen, daß der Stagger-Algorithmus in Abhängigkeit vom Antennenwinkel bei jeder Antennenumdrehung exakt derselbe ist, erfolgt die Synchronisation während jeder Periode des Stagger-Algorithmus wenigstens einmal zu Beginn der Periode oder an mehreren äquidistanten Zeitpunkten der Periode.

Gemäß einer vorteilhaften Ausgestaltung der Erfindung ist der Stagger-Algorithmus so auszulegen, daß seine Periode $T_{stag}$ maximal der Zeitdauer einer Antenneumdrehung entspricht. Die Umdrehungszeit der Antenne ist ein ganzzahliges Vielfaches der Periode des Stagger-Algorithmus und der Zeit $T_{det}$ zwischen zwei Zielentscheidungen im Azimut. Von Zielbeleuchung zu Zielbeleuchtung wiederholen sich die Pulsfolgefrequenzen aus dem Stagger-Algorithmus. Bei Radargeräten mit größeren Reichweiten oder mit einer großen Zielentscheidungszeit $T_{det}$ wird auch die Reihenfolge der Pulsfolgefrequenzen innerhalb der Zielentscheidungszeit beibehalten. Bei kurzen Perioden des Stagger-Algorithmus, bei niedriger mittlerer Pulsfolgefrequenz und bei kleinen Umdrehungszahlen der Antenne genügt es im allgemeinen, zu Beginn jeder Periode des Stagger-Algorithmus Synchronismus mit dem Antennenwinkel herzustellen, wenn sichergestellt ist, daß Zeitdauer und Ausmaß kurzzeitiger Inkonstanzen den Gleichlauf der Staggerung innerhalb der Periode des Stagger-Algorithmus nur unwesentlich beeinflussen. Andernfalls muß innerhalb der Periode des Stagger-Algorithmus an weiteren äquidistanten Zeitpunkten Synchronismus erzwungen werden.

Die Erfindung und weitere Einzelheiten der Erfindung
werden anhand der Figuren 1 bis 3 näher erläutert.

Es zeigen

Fig. 1 das Prinzipschaltbild eines Puls-Doppler-Radars
mit einer Einrichtung zur Synchronisierung des
Antennenantriebs mit der Periode des Stagger-
Algorithmus,

Fig. 2 das Prinzipschaltbild eines Puls-Doppler-Radars
mit einer Anordnung zur Synchronisierung des
Stagger-Algorithmus auf den Antennenbetrieb,

Fig. 3 die Frequenzfolge eines Stagger-Algorithmus zur
Erläuterung der Entstehung von Synchronisationsfehlern.

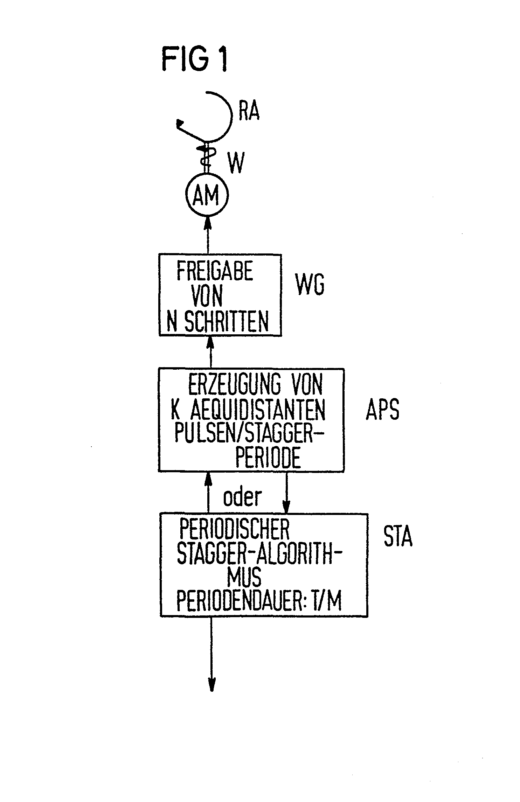

Bei der Darstellung in Fig. 1 zur Durchführung der
Synchronisation, wird davon ausgegangen, daß der
Stagger-Algorithmus freilaufend ist.

Die Antenne RA eines nicht dargestellten Puls-Doppler-
Radars wird über eine mechanische Welle W von einer
Antriebsmaschine AM gedreht. Die Antriebsmaschine kann
als Schrittmotor oder als ein in Winkelinkrementen geschalteter Gleichstrommotor ausgebildet sein, der über
einen Winkelinkrementalgeber WG geschaltet wird. Da die
Drehbewegung der Antenne bei freilaufendem Antrieb sowohl Kurzzeit- als auch Langzeitinkonstanzen unterworfen
ist, die z.B. durch Windböen, Spannungsschwankungen
und/oder Reibung entstehen, muß für Synchronismus zwischen dem Antennendrehwinkel und dem Stagger-Algorithmus
sowie für Synchronismus zwischen dem Antennendrehwinkel
und der Zieldetektion gesorgt werden. Die vom Winkelinkrementalgeber WG gesteuerte Drehung der Antenne erfolgt
in so kleinen Schritten (Winkelinkremente), daß die

0111914

Drehbewegung quasikontinuierlich abläuft. Die Antriebsmaschine AM muß so stark bemessen sein, daß kurzzeitige
Krafteinwirkungen (Windböen) auf die Antenne keinen
Schlupf verursachen können.

Die quasikontinuierliche Drehung der Antenne wird mittels Synchronisierimpulsen für die Steuerung des
Winkelinkrementalgebers WG jeweils zu den Synchronisationszeitpunkten auf die Periode des vorgegebenen
Stagger-Algorithmus synchronisiert. Die Periode des
Stagger-Algorithmus mit der Periodendauer $T_{stag}$ wird
in einer Anordnung STA gebildet, die einerseits der
Aufbereitung der gestaggerten Sendeimpulse und des
Nullimpulses für den Radarsender dienen und andererseits zur Erzeugung von k äquidistanten Impulsen pro
Stagger-Periode an eine nachgeschaltete Anordnung APS
geführt sind. Die Ausgangssignale der Schaltung APS
steuern die Freigabe von N Schritten des Winkelinkrementalgebers WG und damit die Antriebsmaschine AM für
die Antenne.

Wenn T die Zeit einer vollen Antennenumdrehung, mit N
die Anzahl der Schritte des Winkelinkrementalgebers,
K die Anzahl der äquidistanten Synchronisierimpulse
und M die Anzahl der Perioden des Stagger-Algorithmus
pro Antennenumdrehung ist, dann gilt
$$M \cdot N \cdot K \cdot \Delta \varphi = 360^{\circ}.$$
Die Werte K, M und N müssen ganzzahlig sein.

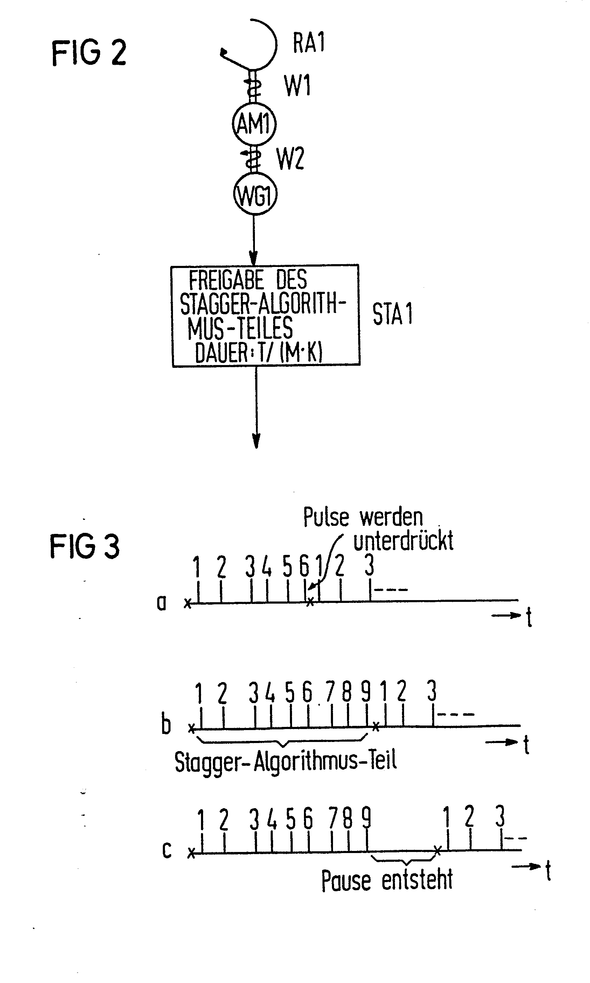

Die Fig. 2 bezieht sich auf ein Ausführungsbeispiel,
bei dem der Antennenantrieb diskontinuierlich oder
kontinuierlich freilaufend ist. Die Antriebsmaschine
AM1 dieser Anordnung ist wie im Ausführungsbeispiel
nach Fig. 1 über eine mechanische Welle W1 mit der

0111914
82 P 2089 E

Antenne RA1 eines Puls-Doppler-Radars gekuppelt. Gleichzeitig wird die Drehbewegung der Antriebsmaschine AM1 über eine zweite mechanische Welle W2 auf einen Winkel-Inkrementalgeber WG1 mit dem Inkrement $\Delta\varphi$ übertragen. Auf diese Weise wird zu vorgegebenen Winkelinkrementen der Stagger-Algorithmus synchronisiert, indem das Ausgangssiganl des Winkelinkrementalgebers WG1 den Stagger-Algorithmus oder einen Teil des Stagger-Algorithmus in der Schaltungsanordnung STA1 erzeugt. Das Ausgangssignal dieser Anordnung STA1 dient der Aufbereitung der gestaggerten Sendeimpulse im Radarssender und des Nullimpulses. Die Beziehung zwischen der Zeit T einer vollen Antennenumdrehung der Anzahl K der Synchronisierimpulse pro Staggerperiode und der Anzahl M der Staggerperioden pro Antennenumdrehung gilt dann $K \cdot M \cdot \Delta\varphi = 360°$. Die Winkelinkremente $\Delta\varphi$ müssen dabei klein genug sein, damit durch den Synchronisationsvorgang bei Inkonstanzen in der Drehbewegung der Antenne im Stagger-Algorithmus keine Pulse unterdrückt werden müssen, wenn die Antenne momentan zu schnell dreht bzw. zu lange Pausen entstehen, wenn die Antenne momentan zu langsam dreht. Dieser Vorgang ist in Fig. 3 dargestellt, wobei unter a die Unterdrückung mehrerer Pulse und unter c die Entstehung einer Pause angedeutet wird. An den mit x bezeichneten Stellen der Zeitachse dieser Darstellungen erfolgt die Freigabe des Stagger-Algorithmus. Zeile b der Fig. 3 zeigt den vollständigen Stagger-Algorithmus-Teil mit den Pulsen 1 bis 9. Im Beispiel nach Zeile a erfolgt die Freigabe für den nächsten Stagger-Algorithmus bereits nach dem sechsten Puls der vorhergehenden Pulsfolge. Die Pulse 7 bis 9 werden hier unterdrückt. Im Beispiel nach Zeile c verzögert sich die Freigabe für die nächste Pulsfolge. Es entsteht eine unerwünschte Pause. Durch die Anbindung der Staggerung an die Antennendrehbewegung übertragen sich die Inkonstanzen der Antennendrehung auf die Staggerung der Pulsfolgefrequenz.

Betrachtet man das Spektrum des empfangenen Signals (Frequenzebene) als Faltung von fouriertransformierter Antennenmodulation mit dem Instabilitätsspektrum und dem Clutterspektrum, so ändert sich der Antennenmodulationsanteil bei Drehbewegungsschwankungen. Die Änderungen des zusammengesetzten Spektrums sind abhängig von der Dominanz des Antennenmodulationsspektrums.

Bei Radargeräten mit Festzeichenunterdrückung ändert sich die zusammengesetzte Übertragungskennlinie über der Dopplerfrequenz derart, daß die Flanke sich im Rhythmus der Inkonstanzen der Antennendrehbewegung zu niedrigen bzw. höheren Frequenzen verschiebt, wobei der Mittelwert erhalten bleibt. Im zeitlichen Mittel bleibt dementsprechend der Improvementfaktor des MTI-Filters erhalten.

Besteht die Notwenigkeit, zusätzlich zum Stagger-Algorithmus auch die Zielentscheidung mit dem Antennenwinkel zu synchronisieren, so geschieht dies vorteilhafterweise so, daß der jeweilige Zielentscheidungszeitpunkt vom tatsächlichen Antennenwinkel, z.B. über den Winkelmentalgeber bzw. von den Steuerimpulsen für den Antennenantrieb hergeleitet wird.

Da jetzt die Clutter-Echos aus Überreichweiten dasselbe stationäre Verhalten wie diejenigen aus der eindeutigen Reichweite aufweisen, können sie mit Rest-Clutter-Karten wirkungsvoll unterdrückt werden. Die Rest-Clutter-Karte besteht aus einem Speicher, der für jedes Bildelement,

0111914

das aus einem Produkt von Entfernungsinkrement und
Öffnungswinkel der Antenne besteht oder für jede geeignete Zusammenfassung von Bildelementen einen charakteristischen Wert speichert und evtl. immer wieder korrigiert. Dieser charakteristische Wert ist ein Maß für die Echoamplitude im jeweiligen Bildelement bzw. in der Elementzusammenfassung. Bleibt dieser Wert über längere Zeit, z.B. über mehrere Antennenumdrehungen, nahezu konstant, handelt es sich um Festzeichen- oder Clutter-Echos oder um einen Störer. In Abhängigkeit von den Clutter- und Festzeichen-Echoamplituden können gezielte Maßnahmen zu deren Unterdrückung getroffen werden, indem z.B. eine Zielentscheidung nach der Schwelle unterdrückt wird, eine Zusatzeinwirkung auf die CFAR vorgesehen ist, oder indem eine Zusatzschwelle gesteuert wird.

Die Anordnung der vorliegenden Erfindung arbeitet auch in Verbindung mit einer Clutter-Karte und kann ebenfalls in Radargeräten mit einer Festzeichenunterdrückung ohne Einzelpulsunterdrückung eingesetzt werden. Als besonders wirkungsvoll erweist sich die Synchronisation in Radargeräten mit hoher Entfernungs- und Azimutauflösung, da bewegte Ziele in diesen Geräten nicht über längere Zeit (mehrere Antennenumdrehungen) im selben Bildelement einen Amplitudenbeitrag liefern, der eine Unterdrückung dieser Ziele bewirken würde.

16 Patentansprüche
3 Figuren

Patentansprüche

1. Puls-Doppler-Radar mit veränderbarer Pulsfolgefrequenz (Staggerung) und einer Einrichtung zur Festzeichenunterdrückung (MTI) sowie einer Rest-Clutter-Karte, d a d u r c h  g e k e n n z e i c h n e t , daß der Antennendrehwinkel des Radargerätes und die Periode des Pulsfolgefrequenzwechsels (Stagger-Periode) synchronisiert sind, derart, daß die Echos von gleichen Festzeichen aus Überreichweiten von Antennenumdrehung zu Antennenumdrehung demselben Entfernungs- und Azimutinkrement zugeordnet sind.

2. Puls-Doppler-Radar nach Anspruch 1, d a d u r c h  g e k e n n z e i c h n e t , daß die Stagger-Periode nach einem vorgegebenen, periodisch ablaufenden Algorithmus aus mehreren Pulsfolgefrequenzen gebildet wird (Stagger-Algorithmus).

3. Puls-Doppler-Radar nach einem der vorhergehenden Ansprüche, d a d u r c h  g e k e n n z e i c h n e t , daß die Antennenumlaufzeit ein ganzzahliges Verhältnis der Zieldetektionszeit ist.

4. Puls-Doppler-Radar nach einem der vorhergehenden Ansprüche, d a d u r c h  g e k e n n z e i c h n e t , daß die Periode des Stagger-Algorithmus ($T_{stag}$) ein ganzzahliges Vielfaches der Zeit zwischen zwei Zielentscheidungen ($T_{det}$) ist.

5. Puls-Doppler-Radar nach einem der vorhergehenden Ansprüche, d a d u r c h   g e k e n n z e i c h n e t , daß die Zeit ($T_{det}$) zwischen zwei Zielentscheidungen ein ganzzahliges Vielfaches der Periode des Stagger-Algorithmus ($T_{stag}$) ist.

6. Puls-Doppler-Radar nach Anspruch 4 und 5, d a d u r c h   g e k e n n z e i c h n e t, daß der Zeitpunkt der Herbeiführung einer Zielentscheidung vom Stagger-Algorithmus abgeleitet ist.

7. Puls-Doppler-Radar nach einem der vorhergehenden Ansprüche, d a d u r c h   g e k e n n z e i c h n e t , daß die Zeit zwischen zwei Zielentscheidungen ($T_{det}$) von Zielbeleuchtung zu Zielbeleuchtung immer dieselben Anteile der Periode des Stagger-Algorithmus umfaßt.

8. Puls-Doppler-Radar nach einem der vorhergehenden Ansprüche, d a d u r c h   g e k e n n z e i c h n e t , daß in der Zeit zwischen zwei Zielentscheidungen ($T_{det}$) die Reihenfolge der verschiedenen Pulsfolgefrequenzen des Stagger-Algorithmus eingehalten wird.

9. Puls-Doppler-Radar nach einem der Ansprüche 1 bis 8, d a d u r c h  g e k e n n z e i c h n e t , daß die Synchronisation des Antennenwinkels zu einem hypothetischen Zeitpunkt des Stagger-Algorithmus durchgeführt wird, wobei der hypothetische Zeitpunkt von einer Taktfrequenz abgeleitet wird, die dem Mittelwert der verwendeten Pulsfolgefrequenzen entspricht.

10. Puls-Doppler-Radar nach einem der vorhergehenden Ansprüche, d a d u r c h  g e k e n n z e i c h - n e t , daß bei freilaufendem Stagger-Algorithmus zu vorgegebenen äquidistanten Zeitpunkten die Antenne um eine vorgegebene Anzahl von Winkelinkrementen weitergedreht wird.

11. Puls-Doppler-Radar nach Anspruch 10, d a d u r c h  g e k e n n z e i c h n e t , daß durch eine entsprechende Wahl der Größe der Winkelinkremente eine quasikontinuierliche Drehbewegung der Antenne erreicht wird.

12. Puls-Doppler-Radar nach einem der Ansprüche 1 bis 9, d a d u r c h  g e k e n n z e i c h n e t, daß bei freilaufendem Antennenantrieb zu vorgegebenen Werten des Winkelinkrementes der Stagger-Algorithmus synchronisiert wird.

FIG 1

RA

W

(AM)

| FREIGABE VON N SCHRITTEN | WG |

| ERZEUGUNG VON K AEQUIDISTANTEN PULSEN/STAGGER-PERIODE | APS |

oder

| PERIODISCHER STAGGER-ALGORITH-MUS PERIODENDAUER: T/M | STA |

FIG 2

RA1

W1

(AM1)

W2

(WG1)

FREIGABE DES
STAGGER-ALGORITH-
MUS-TEILES
DAUER: T/ (M·K)

STA1

FIG 3

Pulse werden
unterdrückt

a

1 2 3 4 5 6 1 2 3 ---

→ t

b

1 2 3 4 5 6 7 8 9 1 2 3 ---

→ t

Stagger-Algorithmus-Teil

c

1 2 3 4 5 6 7 8 9 1 2 3 --

→ t

Pause entsteht